# EUROPÄISCHE PATENTANMELDUNG

(11) **EP 0 872 336 A2**
(43) Veröffentlichungstag der Anmeldung: **21.10.1998**
(21) Anmeldenummer: 98106654.1
(22) Anmeldetag: 09.04.1998
(51) Int. Cl.: B32B 27/08, C09K 19/00

(54) **Polymerlaminate mit erhöhtem Deckvermögen**

(30) Priorität: 17.04.1997 DE 19715993
(71) Anmelder: Clariant GmbH, 65929 Frankfurt am Main (DE)
(72) Erfinder: Schönfeld, Axel, Dr., 65207 Wiesbaden (DE); Dewald, Bernd, 65510 Idstein (DE)

(57) **Zusammenfassung**

Ein Polymerlaminat, bestehend im wesentlichen aus mindestens zwei cholesterischen flüssigkristalliner Polymerschichten und einer dazwischenliegenden lichtabsorbierenden Schicht ist als Ausgangsmaterial für Effektpigmente mit vom Betrachtungswinkel abhängigem Farbeindruck geeignet.

## Beschreibung

Die Erfindung betrifft Polymerlaminate mit einem brillanten, vom Betrachtungswinkel abhängigen Farbeindruck.

Cholesterische Flüssigkristallpolymere zeichnen sich durch eine helikale Überstruktur aus. Diese führt zum einen dazu, daß das Material nicht mehr die bei nematischen Flüssigkristallpolymeren übliche Anisotropie der mechanischen Eigenschaften aufweist. Zum anderen zeigt das Material ausgeprägte Farbeffekte. Die Farberscheinung derartiger flüssigkristalliner Verbindungen kommt durch eine selektive Reflexion an der Helix der cholesterischen Struktur zustande. Von dem einfallenden Licht werden nur diejenigen Lichtwellen reflektiert, deren Wellenlänge mit der Ganghöhe der helikalen Überstruktur der flüssigkristallinen Verbindung übereinstimmt, wogegen die Lichtanteile anderer Wellenlängen durch den flüssigkristallinen Polymerfilm hindurchgehen und von einem dunklen Untergrund absorbiert werden. Derartig ausgerichtete Filme aus Flüssigkristallpolymeren haben bei orthogonaler Betrachtung eine bestimmte Farbe, die sich bei einer geneigten Betrachtungsrichtung kontinuierlich zu kürzerwelligen Farben verschiebt. Diese vom Betrachtungswinkel abhängige Farberscheinung der Oberfläche macht die Filme optisch sehr effektvoll und für bestimmte Anwendungsfalle besonders wünschenswert. Nachteilig ist jedoch die Transparenz der flüssigkristallinen Polymerfilme für solche Wellenlängen, die nicht selektiv reflektiert werden. Daher ist ein absorbierender, vorzugsweise ein schwarzer, Untergrund erforderlich, um die selektive Reflexion zur dominanten Farberscheinung werden zu lassen.

Bei der selektiven Reflexion an der helikalen Überstruktur der Flüssigkristallpolymere wird nur eine Polarisationsrichtung des Lichts reflektiert. Beispielsweise wird bei einer rechtsgängigen Helix rechts circular polarisiertes Licht reflektiert, während der links circular polarisierte Anteil transmittiert und gegebenenfalls vom schwarzen Untergrund absorbiert wird. Dies bedeutet, daß solche flüssigkristallinen Polymerfilme nur max. 50 % des einfallenden Lichtes der betreffenden Wellenlänge reflektieren können.

Aus flüssigkristallinen Polymerfilmen ist es möglich, transparente Pigmente mit einem optisch variablen Farbeindruck herzustellen (DE 44 16 191 A1; DE 44 18 075 A1). Hierzu werden die orientierten Flüssigkristallfilme vernetzt und danach zu kleinen Plättchen gemahlen. Für die Anwendung dieser Pigmente ist aufgrund ihrer Transparenz immer ein dunkler Untergrund notwendig. Nachteilig ist, daß dies einen zusätzlichen Prozeßschritt erfordert und mit Kosten verbunden ist.

Aufgabe der vorliegenden Erfindung war es daher, deckende flüssigkristalline Pigmente mit einem brillanten vom Betrachtungswinkel abhängigen Farbeindruck zu entwickeln, die die genannten Nachteile des Standes der Technik überwinden.

Es wurde gefunden, daß flüssigkristalline Polymerlaminate mit einer absorbierenden Mittelschicht überraschenderweise die vorliegende Aufgabe lösen.

Gegenstand der vorliegenden Erfindung ist ein Polymerlaminat bestehend im wesentlichen aus mindestens zwei cholesterischen, flüssigkristallinen Polymerschichten und einer dazwischenliegenden lichtabsorbierenden Schicht.

Um den erfindungsgemäßen Effekt zu erreichen, ist es notwendig, daß die lichtabsorbierende Schicht die Mittelschicht eines (mindestens) dreilagigen Aufbaus ausbildet. Diese Mittelschicht ist von beiden Seiten von je einer cholesterischen Flüssigkristallpolymerschicht überzogen. Ein solches Laminat erscheint aufgrund der absorbierenden Mittelschicht von beiden Seiten deckend. Es ist prinzipiell möglich, daß das erfindungsgemäße Polymerlaminat mehr als nur zwei transparente cholesterische Flüssigkristallpolymerschichten enthält. Weiterhin kann es vorteilhaft sein, das Laminat von einer oder von beiden Seiten mit einer transparenten Klarlackschicht zu versehen, die nicht flüssigkristallin zu sein braucht.

Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Die Gesamtschichtdicke des erfindungsgemäßen Polymerlaminats liegt im Bereich von 0,5 µm bis 100 µm, bevorzugt zwischen 1 µm und 25 µm und insbesondere zwischen 3 µm und 15 µm. Je nach gewünschter Anwendung können aber auch hiervon abweichende Schichtdicken zweckmäßig sein. Es ist vorteilhaft, wenn die transparenten cholesterischen Flüssigkristallpolymerschichten eine vergleichbare Schichtdicke aufweisen.

Die zur Ausbildung der cholesterischen Flüssigkristallpolymerschichten eingesetzten Polymere können sowohl unvernetzte Polymere als auch Polymernetzwerke sein, die eine cholesterische Flüssigkristallphase aufweisen.

Unvernetzte Polymere sind beispielsweise cholesterische Hauptkettenpolymere, cholesterische Seitengruppenpolymere oder kombinierte HauptkettenSeitengruppenpolymere. Polymernetzwerke können entweder aus vernetzbaren Polymeren oder auch aus vernetzbaren niedermolekularen oder oligomeren Verbindungen durch Vernetzung im Film hergestellt werden.

Bevorzugte Polymere für den Aufbau der Flüssigkristallschichten sind beispielsweise Polysiloxane, Polyvinylether, Polyepoxide, Polyacrylate oder Polymethacrylate mit Mesogenen in der Seitengruppe, die in DE 44 16 191 A1 und DE 44 18 075 A1 beschriebenen Seitengruppenpolymere, insbesondere enthaltend Acryloyloxyalkyloxybenzoesäurephenylester als achirale Komponente und Cholesterinacryloyloxyalkyloxybenzoate als chirale Komponente, sowie cholesterische Hauptkettenpolymere. Die cholesterischen Hauptkettenpolymere werden im allgemeinen aus einer chiralen Komponente sowie aus Hydroxycarbonsäuren, Aminocarbonsäuren und/oder einer Kombination von Dicarbonsäuren und Diolen oder Diaminen hergestellt. In der Regel bestehen die Hauptkettenpolymere im wesentlichen aus aromatischen Bestandteilen. Es ist jedoch auch möglich, aliphatische und cycloaliphatische Komponenten, wie z. B. Cyclohexandicarbonsäure, einzusetzen.

Besonders bevorzugt im Sinne der vorliegenden Erfindung sind cholesterische flüssigkristalline Hauptkettenpolymere, bestehend aus
a) 0 bis 99,9 Mol % mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol % mindestens einer Verbindung aus der Gruppe der aromatischen Dicarbonsäuren und cycloaliphatischen Dicarbonsäuren;
c) 0 bis 49,95 Mol % mindestens einer Verbindung aus der Gruppe der aromatischen Diole, cycloaliphatischen Diole, aromatischen Diamine und aromatischen Hydroxyamine;
d) 0,1 bis 40 Mol %, vorzugsweise 1 bis 25 Mol %, an chiralen, bifunktionellen Comonomeren, und
e) 0 bis 5 Mol % einer verzweigbaren Komponente mit mehr als zwei funktionellen Gruppen, wobei die Summe 100 Mol % ergibt.

Besonders geeignete Hydroxycarbonsäuren sind beispielsweise Hydroxybenzoesäuren, wie 3-Hydroxy- oder 4-Hydroxybenzoesäure, Hydroxynaphthalincarbonsäuren, wie z. B. 2-Hydroxy-7-carboxy-naphthalin oder 2-Hydroxy-6-carboxy-naphthalin, Hydroxybiphenylcarbonsäuren sowie Hydroxyzimtsäuren, wie z. B. 3-Hydroxy- oder 4-Hydroxyzimtsäure.

Besonders geeignete Aminocarbonsäuren sind beispielsweise 3-Amino- oder 4-Aminobenzoesäure.

Besonders geeignete Dicarbonsäuren sind beispielsweise Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren sowie Carboxyzimtsäuren.

Besonders geeignete Diole, Aminophenole und Diamine sind Hydrochinone, Dihydroxybiphenyle, wie 4,4-Dihydroxybiphenyl, Napthalindiole, wie 2,6-oder 2,7-Naphthalindiol, Dihydroxydiphenylsulfone, Dihydroxydiphenylether, Dihydroxyterphenyle, Dihydroxydiphenylketone, m- und p-Phenylendiamin, Diaminoanthrachinone, Dihydroxyanthrachinone, m- und p-Aminophenol und Aminonaphthol.

Vorzugsweise stehen die funktionellen Gruppen der vorstehend genannten Verbindungen nicht in ortho-Stellung zueinander.

Besonders geeignete chirale, bifunktionelle Monomere sind Isosorbid, Isomannid, Isoidit, Camphersäure, (D)- oder (L)-Methylpiperazin, (D)- oder (L)-3-Methyladipinsäure, Butan-2,3-diol sowie bifunktionelle Derivate der Weinsäure, wie beispielsweise (-)-2,3-O-Isopropyliden-D-threitol oder (-)-2,3-O-Isopropyliden-L-weinsäuredimethylester.

Bei den angegebenen Prozentsätzen ist darauf zu achten, daß die dem Fachmann bekannte Stöchiometrie der funktionellen Gruppen zur Polykondensation gewährleistet ist.
Zusätzlich können die Polymere noch Komponenten mit mehr als zwei funktionellen Gruppen, wie beispielsweise Dihydroxybenzoesäuren, Trihydroxylbenzole oder Trimellitsäure enthalten. Diese Komponenten wirken als Verzweigungstelle im Polymer und sollten nur in geringen Konzentrationen, beispielsweise 0 bis 5 Mol-%, zugegeben werden.

Für den Aufbau einer cholesterischen Flüssigkristallpolymerschicht ist auch ein Blend aus zwei oder mehreren cholesterischen flüssigkristallinen Polymere geeignet, der sich wie ein Einkomponentensystem verhält. Ein solcher Blend kam beispielsweise durch gemeinsame Extrusion oder gemeinsames Lösen in einem Lösemittel hergestellt werden.

Die Herstellung der cholesterischen flüssigkristallinen Polymere kann nach üblichen Polykondensationverfahren durchgeführt werden. Beispielsweise eignet sich die Schmelzkondensation mit Acetanhydrid, wie z.B. in EP-A-0 391 368 beschrieben, bei Temperaturen von 120 bis 350 °C.

Um brillante Farbeffekte zu erhalten, müssen Flüssigkristallpolymere eingesetzt werden, deren Helix zu einer Reflexion im sichtbaren Bereich führt. Es kann aber auch für bestimmte Anwendungen - beispielsweise für das menschliche Auge unsichtbare Codierungen - zweckmäßig sein, Flüssigkristallpolymere einzusetzen, deren Helix zu einer Reflexion von Licht außerhalb des sichtbaren Spektrums führt.

Die absorbierende Mittelschicht des Polymerlaminats muß nicht notwendigerweise aus einem Polymer bestehen und braucht auch kein Flüssigkristall zu sein oder zu enthalten. Beispielsweise ist es möglich, daß die Mittelschicht aus einem Farbmittel, Ruß, plättchenförmigen Graphitpartikeln oder aus einem eingefärbten Polymer besteht. Der Gehalt an dem die absorbierende Mittelschicht ausbildenden Stoff im Polymerlaminat beträgt zweckmäßig 1 bis 95 Gew.-%, vorzugsweise 3 bis 90 Gew.-%.

Die Farbe des Laminats kann auch dadurch beeinflußt werden, daß als absorbierende Mittelschicht anstelle von schwarz ein anderer Farbton, beispielsweise blau, rot oder grün gewählt wird. Bei Verwendung von nicht schwarzen Farbmitteln resultiert ein Farbflop, wie er bei transparenten Flüssigkristallpigmenten beobachtet wird, wenn sie auf farbige Untergründe appliziert werden.

Es ist darauf zu achten, daß eine gute Adhäsion der absorbierenden Mittelschicht zu den benachbarten Flüssigkristallpolymerschichten gewährleistet ist, um ein Auseinanderbrechen zu vermeiden. Bei einer unzureichenden Adhäsion kann die zusätzliche Einfügung von Zwischenschichten mit hoher Adhäsion zweckmäßig sein, z. B. durch eine Polyvinylacetatschicht oder andere dem Fachmann bekannte Adhäsionspolymere.

Gegenstand der vorliegenden Erfindung ist auch ein Verfahren zur Herstellung eines Polymerlaminats, dadurch gekennzeichnet, daß man die jeweiligen Schichten nacheinander, gegebenenfalls unter Zwischentrocknung oder Vernetzung, auf einen planaren Untergrund aufträgt und anschließend ablöst.

In einem Lösemittel gelöste cholesterische Flüssigkristallpolymere können beispielsweise auf dem planaren Untergrund, z. B. einer Folie, Glasscheibe, Papier oder einem Metallband, nacheinander aufgerakelt werden, wobei nach dem Trocknen der ersten Schicht die lichtabsorbierende zweite Schicht und, gegebenenfalls nach derem Trocknen, dann die dritte Schicht aufgebracht wird. Die zur Ausbildung der absorbierenden zweiten Schicht erforderlichen absorbierenden Partikel können z. B. aufgesprüht oder als dünner Lackfilm aufgetragen werden. Die speziellen optischen Eigenschaften der erfindungsgemäßen Effektbeschichtungen werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der Laminate läßt sich die Ganghöhe der Helix und somit die Selektivreklexion dauerhaft eingefrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Laminat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Bei vernetzbaren cholesterischen Flüssigkristallpolymeren kann der Schichtaufbau beispielsweise erfolgen, indem zunächst die erste Flüssigkristallpolymerschicht aufgebracht wird, nach deren Vernetzung die Mittelschicht und schließlich wieder eine Flüssigkristallpolymerschicht, die auch wieder vernetzt wird. Die Vernetzung kann z. B. durch UV-Betrahlung initiiert werden.

Besonders bevorzugt zur Herstellung eines erfindungsgemäßen Polymerlaminats ist ein Verfahren, bei dem zunächst, wie vorstehend beschrieben, die erste Schicht hergestellt wird und darauf eine cholesterische Flüssigkristallpolymerlösung aufgetragen wird, in der die absorbierenden Partikel dispergiert sind. Nachdem man diese Lösung aufgetragen hat, setzen sich die absorbierenden Partikel ab und bilden beim Trocknen des Films von selbst die notwendige Mittelschicht, ohne daß ein eigener Prozeßschritt notwendig ist.

Besonders bevorzugt zur Herstellung eines erfindungsgemäßen Polymerlaminats ist ein Verfahren, bei dem thermoplastische cholesterische Flüssigkristallpolymere in mindestens zwei Polymerschichten und einer dazwischenliegenden lichtabsorbierenden Schicht durch Coextrusion mit eventuell einem weiteren Polymer als Trägerschicht extrudiert werden.

Die erfindungsgemäßen Polymerlaminate eignen sich aufgrund ihrer brillanten Farbeffekte als Ausgangsmaterial zur Herstellung blickwinkelabhängiger Effektpigmente. Hierzu wird das Polymerlaminat mit herkömmlichen Zerkleinerungsaggregaten auf die gewünschte Plättchengröße zerkleinert. Es ist darauf zu achten, daß noch immer eine plättchenförmige Geometrie vorhanden ist, d. h. es sollte ein Plättchendurchmesser vorhanden sein, der mindestens zwei- bis dreimal so groß wie die Plättchendicke ist.

Effektpigmente auf Basis der erfindungsgemäßen Polymerlaminate können beispielsweise für die Lackierung von natürlichen oder synthetischen Materialien, beispielsweise Holz, Kunststoffe, Metall oder Glas, insbesondere aber der Karosserie oder von Karosserieteilen von Kraftfahrzeugen, eingesetzt werden.

Die erfindungsgemäß hergestellten Effektpigmente sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics", Springer Series in Electrophysics 14, Springer Verlag, 2nd Edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäß hergestellten Effektpigmente geeignet als Farbmittel in triboelektrisch oder elektrokinetisch versprühbaren Pulverlacken, die zur Oberflächenbeschichtung von Gegenständen aus beispielsweise Metall, Holz, Kunststoff, Glas, Keramik, Beton,Textilmaterial, Papier oder Kautschuk zur Anwendung kommen (J. F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltige Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Effektpigmente als Farbmittel in Ink-Jet Tinten auf wäßriger und nichtwäßriger Basis sowie in solchen Tinten, die nach dem hot-melt-Verfahren arbeiten, geeignet.

In den nachfolgenden Beispielen bedeuten Teile Gewichtsteile.

### Beispiele zur Herstellung der cholesterischen Flüssigkristallpolymeren:

### Beispiel A:

20317 Teile 2-Hydroxy-6-naphthoesäure, 39778 Teile 4-Hydroxy-benzoesäure, 21228 Teile 4,4'-Dihydroxibiphenyl und 18022 Teile (1R,3S)-(+)-Camphersäure werden in einem Reaktor mit 62914 Teilen Essigsäureanhydrid sowie 130 Teilen Kaliumacetat versetzt und mit einem leichten Stickstoffstrom durchspült. Die Mischung wird innerhalb von 15 Minuten auf 150 °C erhitzt und diese Temperatur für 30 Minuten gehalten. Anschließend wird die Temperatur innerhalb von 330 Minuten auf 330 °C erhöht und die Schmelze 80 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante gelbstichig grüne Farbe, die bei schrägem Betrachtungswinkel blau erscheint.

### Beispiel B:

20317 Teile 2-Hydroxy-6-naphthoesäure, 39778 Teile 4-Hydroxy-benzoesäure, 20424 Teile 4,4'-Dihydroxibiphenyl und 18993 Teile (1R,3S)-(+)-Camphersäure werden in einem Reaktor mit 62914 Teilen Essigsäureanhydrid sowie 30 Teilen Kaliumacetat versetzt und mit einem leichten Stickstoffstrom durchspült. Die Mischung wird innerhalb von 15 Minuten auf 150 °C erhitzt und diese Temperatur für 30 Minuten gehalten. Anschließend wird die Temperatur innerhalb von 270 Minuten auf 325 °C erhöht und die Schmelze 30 Minuten bei dieser Temperatur gehalten. Ab ca. 220 °C beginnt Essigsäure abzudestillieren. Danach wird die Stickstoffspülung abgebrochen und innerhalb von 120 Minuten Vakuum angelegt. Die Schmelze wird für weitere 15 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante rötlich goldene Farbe, die bei schrägem Betrachtungswinkel grünstichtig gelb erscheint.

### Beispiel C

18 Mol 2-Hydroxy-6-naphthoesäure, 48 Mol 4-Hydroxy-benzoesäure, 17 Mol 4,4 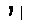 Dihydroxybiphenyl und 17 Mol Camphersäure werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325° C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer hat eine brillante, gelbstichtig grüne Farbe, die bei schrägem Anblick blau erscheint. Die Farbe tritt schon während der Kondensation im Vakuum auf und bleibt nach dem Abkühlen erhalten.

### Beispiele zur Herstellung der erfindungsgemäßen Polymerlaminate:

### Beispiel 1:

Eine 15 gew.-%ige Lösung von cholesterischem Flüssigkristallpolymer nach Beispiel A in N-Methylpyrrolidon werden mit einem Hand-Coater Nr. 3 auf eine Polyimid-Folie zu einem 24 µm starken Film aufgezogen und im Vakuumschrank bei 80 °C getrocknet. Die Schichtdicke beträgt nach demTrocknen 3,6 µm. Anschließend wird eine zweite, gleich dicke Schicht mit einer 15 gew.-%igen Lösung des gleichen cholesterischen Flüssigkristallpolymeren, in die noch 1,5 Gew.-% Ruß durch 10 minütiges Dispergieren bei 13500 Upm mit einem Ultra-Turrax eingearbeitet wurden, aufgetragen. Nach dem Trocknen wird eine dritte Schicht entsprechend der ersten aufgetragen und getrocknet. Es ergibt sich ein 3-Schichtlaminat mit einer Schichtdicke von insgesamt etwa 10 - 11 µm. Zum Entwickeln der Farbe wird das Laminat im Wärmeschrank 5 Min auf 280 °C geheizt.

Man erhält ein Laminat, das auf weißem und auf schwarzem Untergrund bei senkrechtem Anblick eine brillante gelbstichig grüne Farbe zeigt, die bei schrägem Betrachtungswinkel blau erscheint.

### Beispiel 2

Eine 15 gew.-%ige Dispersion des cholesterischen Flüssigkristallpolymers aus Beispiel C (Korngröße D₅₀ = 6 - 10 µm) in Isobutanol wird mit einem Rakel, dessen Spaltbreite 24 µm beträgt, auf eine Aluminiumfolie aufgezogen. Nach dem Trocknen des Dispersionsauftrages wird die beschichtete Aluminiumfolie über eine heiße Metalloberfläche gezogen , wodurch die untere Flüssigkristallpolymerschicht erzeugt wird. Die Verweilzeit auf der heißen Oberfläche beträgt bei 350°C Oberflächentemperatur 3 - 5 Sekunden. Der Film zeigt eine grüne Farbe, die bei schrägem Anblick blau erscheint. Die cLCP-Schicht ist sehr gut ausgebildet und homogen. Die Schichtdicke liegt bei 3 - 5 µm. Auf diese Schicht wird eine 1 gew.-%ige Dispersion plättchenförmiger Graphitteilchen (z.B. Graphitan 7700®, kommerziell erhältlich bei Ciba SC) in 2%iger wässriger Carboxymethylcellulose (Tylose H200X®, kommerziell erhältlich bei Clariant) mit einem 24 µm Rakel aufgezogen und getrocknet. Anschließend wird nochmals die 15 gew.-%ige Dispersion des cholesterischen Flüssigkristallpolymers mit einem 24 µm Rakel aufgezogen und nach dem Trocknen durch Ziehen der Folie über eine Metalloberfläche von 350°C Oberflächentemperatur mit einer mittleren Verweilzeit von 3 - 5 Sekunden die obere Flüssigkristallpolymerschicht erzeugt. Durch die mittlere, Licht absorbierende Graphitanschicht erhält man einen deckenden Polymerfilm, der bei senkrechter Betrachtung dunkelgrün und bei schräger Betrachtung dunkelblau erscheint. Die Gesamtschichtdicke liegt bei 7 - 12 µm.

Zur Herstellung des Effektpigments wird die mit cLCP beschichtete Aluminiumfolie in halb konzentrierte Salzsäure gegeben, wobei sich die Aluminiumträgerfolie auflöst und der cholesterische Polymerfilm zurückbleibt. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein Blech aufgesprüht und mit Klarlack überzogen. Nach dem Einbrennen zeigt der Lack eine dunkelgrüne Farbe, die bei schrägem Anblick dunkelblau erscheint.

### Beispiel 3

Die Herstellung des drei Lagen enthaltenden cLCP-Verbundes erfolgt wie in Beispiel 2 beschrieben. Zur Erzeugung der mittleren Schicht wird jedoch eine 1 gew.-%ige Dispersion plättchenförmiger Pigmentteilchen, z.B. ®Iriodin Super Russet (erhältlich bei Merck) in 2%iger wässriger Carboxymethylcellulose (Tylose H200X®, kommerziell erhältlich bei Clariant) mit einem 24 µm Rakel aufgezogen und getrocknet. Durch die mittlere Iriodinschicht erhält man einen Polymerfilm, der bei senkrechter Betrachtung rotstichig grün, bei schräger Betrachtung in Lichtrichtung rötlich und bei schräger Betrachtung gegen die Lichtrichtung violett erscheint. Die Gesamtschichtdicke liegt bei 7 - 12 µm.

Die Herstellung des Effektpigments erfolgt wie in Beispiel 2 beschrieben. Das Auflösen der Aluminiumfolie erfolgt jedoch in halb konzentrierter Natronlauge. Das Effektpigment zeigt nach dem Einbrennen im Lack durch die mittlere Iriodinschicht bei senkrechter Betrachtung eine rotstichig grüne Farbe, die bei schräger Betrachtung in Lichtrichtung rötlich und bei schräger Betrachtung gegen die Lichtrichtung violett erscheint.

### Beispiel 4

Die Herstellung des drei Lagen enthaltenden cLCP-Verbundes erfolgt wie in Beispiel 2 beschrieben, jedoch unter Verwendung einer Polyimidfolie, z.B. Kapton®, als Trägerfolie. Zur Erzeugung der mittleren Schicht wird eine 1 gew.-%ige Dispersion einer Aluminiumpaste, z.B. Stapa Metallux 2196®, in 2%iger wässriger Carboxymethylcellulose (Tylose H200X®, kommerziell erhältlich bei Clariant) mit einem 24 µm Rakel aufgezogen und getrocknet. Durch die mittlere, Aluminiumteilchen enthaltende Schicht erhält der Polymerfilm einen metallischen Effekt, der bei senkrechter Betrachtung grün, bei schräger Betrachtung blau erscheint. Die Gesamtschichtdicke liegt bei 13 - 16 µm.
Zur Herstellung des Effektpigments wird die Trägenfolie über eine Umlenkrolle mit kleinem Durchmesser geführt, wobei der cholesterische Polymerfilm abblättert. Die Polymerpartikel werden in einer Universalmühle gemahlen. Das Mahlgut wird zur Verengung der Teilchengrößenverteilung über einen Sieb mit 63 µm Maschenweite gesiebt. Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack eine metallisch grüne Farbe, die bei schräger Betrachtung blau erscheint.

## Patentansprüche

1. Polymerlaminat, bestehend im wesentlichen aus mindestens zwei cholesterischen flüssigkristallinen Polymerschichten und einer dazwischenliegenden lichtabsorbierenden Schicht.

2. Polymerlaminat nach Anspruch 1, dadurch gekennzeichnet, daß die lichtabsorbierende Schicht die Mittelschicht eines dreilagigen Aufbaus ist.

3. Polymerlaminat nach Anspruch 1 oder 2, dadurch gekennzeichnet, daß es von einer oder von beiden Seiten mit einer transparenten Klarlackschicht bedeckt ist.

4. Polymerlaminat nach Anspruch 1 oder 2, dadurch gekennzeichnet, daß es eine Gesamtdicke von 0,5 bis 100 µm, vorzugsweise von 1 bis 25 µm, hat.

5. Polymerlaminat nach mindestens einem der Ansprüche 1 bis 4, dadurch gekennzeichnet, daß die cholesterischen flüssigkristallinen Polymere Seitengruppenpolymere aus der Gruppe der Polysiloxane, Polyvinylether, Polyepoxide, Polyacrylate und Polymethacrylate mit Mesogenen in der Seitengruppe sind.

6. Polymerlaminat nach mindestens einem der Ansprüche 1 bis 5, dadurch gekennzeichnet, daß die cholesterischen flüssigkristallinen Polymere Hauptkettenpolymere sind.

7. Polymerlaminat nach Anspruch 6, dadurch gekennzeichnet, daß die Hauptkettenpolymere aus
a) 0 bis 99,9 Mol % mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol % mindestens einer Verbindung aus der Gruppe der aromatischen Dicarbonsäuren und cycloaliphatischen Dicarbonsäuren;
c) 0 bis 49,95 Mol % mindestens einer Verbindung aus der Gruppe der aromatischen Diole, cycloaliphatischen Diole, aromatischen Diamine und aromatischen Hydroxyamine;
d) 0,1 bis 40 Mol %, vorzugsweise 1 bis 25 Mol %, an chiralen, bifunktionellen Comonomeren, und
e) 0 bis 5 Mol % einer verzweigbaren Komponente mit mehr als zwei funktionellen Gruppen, wobei die Summe 100 Mol % ergibt, bestehen.

8. Polymerlaminat nach Anspruch 6 oder 7, dadurch gekennzeichnet, daß Hydroxybenzoesäuren, Hydroxynapthalincarbonsäuren, Hydroxybiphenylcarbonsäuren, Hydroxyzimtsäuren; 3-oder 4-Aminobenzoesäure; Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren; Hydrochinone, Dihydroxybiphenyle, Naphthalindiole, Dihydroxydiphenylsulfone, Dihydroxydiphenylether, Dihydroxyterphenyle, Dihydroxydiphenylketone, m- und p-Phenylendiamin, Diaminoanthrachinone, Dihydroxyanthrachinone, m- oder p-Aminophenol; Isosorbid, Isomannid, Isoidit, Camphersäure, (D)- oder (L)-Methylpiperazin, (D)- oder (L)-3-Methyladipinsäure, Butan-2,3-diol, (-)-2,3-O-Isopropyliden-D-threitol oder (-)-2,3-O-Isopropyliden-L-weinsäure-dimethylester; oder eine Kombination davon enthalten sind.

9. Polymerlaminat nach mindestens einem der Ansprüche 1 bis 8, dadurch gekennzeichnet, daß die lichtabsorbierende Schicht aus einem Farbmittel, einem eingefärbten Polymer, Ruß oder Graphit besteht.

10. Polymerlaminat nach mindestens einem der Ansprüche 1 bis 9, dadurch gekennzeichnet, daß die lichtabsorbierende Schicht schwarz ist.

11. Verfahren zur Herstellung eines Polymerlaminats nach einem oder mehreren der Ansprüche 1 bis 10, dadurch gekennzeichnet, daß man die entsprechenden Schichten nacheinander, gegebenenfalls unter Zwischentrocknung oder Vernetzung, auf einen planaren Untergrund aufträgt und anschließend ablöst.

12. Verfahren nach Anspruch 11, dadurch gekennzeichnet, daß ein in einem Lösemittel gelöstes cholesterisches flüssigkristallines Polymer auf einem planaren Untergrund aufgebracht und getrocknet, darauf die lichtabsorbierende Schicht und, gegebenenfalls nach derem Trocknen, darauf ein weiteres in einem Lösemittel gelöstes cholesterisches flüssigkristallines Polymer aufgebracht wird.

13. Verfahren nach Anspruch 11 oder 12, dadurch gekennzeichnet, daß auf die erste Polymerschicht ein in einem Lösemittel gelöstes cholesterisches flüssigkristallines Polymer, worin die die lichtabsorbierende Schicht bildenden Partikel dispergiert sind, aufgetragen wird.

14. Verwendung des Polymerlaminats nach mindestens einem der Ansprüche 1 bis 10, als Ausgangsmaterial zur Herstellung von Effektpigmenten.
